# FASCICULE DE BREVET EUROPEEN

(11) **EP 2 721 934 B1**
(45) Date de publication et mention de la délivrance du brevet: **22.07.2015**
(21) Numéro de dépôt: 13188001.5
(22) Date de dépôt: 10.10.2013
(51) Int. Cl.: A23L 1/317, A22C 11/00, H05B 3/00, A23L 1/01

(54) **Dispositif de traitement thermique en particulier pour des saucisses**
Vorrichtung zur Wärmebehandlung, insbesondere für Würstchen
Heat-treatment device, in particular for sausages

(30) Priorité: 16.10.2012 FR 1259842
(43) Date de publication de la demande: 23.04.2014
(73) Titulaire: ARMOR INOX SA, F-56430 Mauron (FR)
(72) Inventeur: CADORET, Bernard, 56430 MAURON (FR); MARQUET, Olivier, 56430 MAURON (FR)
(74) Mandataire: Maillet, Alain

(56) Documents cités:
- WO-A1-2011/107496
- FR-A1- 2 692 443
- US-A- 5 073 394
- US-A- 5 997 931

## Description

La présente invention concerne un dispositif de traitement thermique de produits de faible dimensions et en particulier de saucisses et un ensemble comportant un tel dispositif.

L'invention est plus particulièrement adaptée dans le cadre de saucisses co-extrudées. De telles saucisses comportent un coeur de produits alimentaires et une pellicule extérieure constituée d'un gel, par exemple du type alginate ou collagène.

De telles saucisses sont réalisées en continu et coupées à longueur avant un traitement thermique. Elles peuvent également être produites en chapelet sans séparation les unes des autres.

Pour que la saucisse ainsi coupée se maintienne, elle passe dans un courant d'eau chaude de manière à stabiliser le gel et coaguler les protéines de surface.

La saucisse ainsi solidifiée en surface peut alors être manipulée plus aisément sans risque de détérioration de son aspect de surface.

Le document US-A-5,997,931 et le document WO-A-2011/107496 divulguent des dispositifs de traitement thermique.

Un objet de la présente invention est de proposer un dispositif de traitement thermique de saucisses qui ne présente pas les inconvénients de l'art antérieur et qui en particulier présente une hauteur d'introduction des saucisses réduite dans le dispositif collecteur.

A cet effet, est proposé un dispositif de traitement thermique, en particulier pour des saucisses du type saucisses co-extrudées, ledit dispositif de traitement thermique comportant:
- une tuyauterie s'étendant entre un orifice d'introduction et un orifice d'évacuation par lequel les saucisses sortent de la tuyauterie,
- un dispositif collecteur qui est disposé au-dessus de l'orifice d'introduction, qui débouche dans la tuyauterie au niveau de l'orifice d'introduction et qui est destiné à permettre l'introduction des saucisses dans la tuyauterie,
- une pompe destinée à propulser de l'eau chaude dans la tuyauterie en amont de l'orifice d'introduction ou dans le dispositif collecteur,

le niveau d'eau dans le dispositif collecteur étant plus haut que le niveau de l'orifice d'évacuation et que le niveau de l'orifice d'introduction, et
la tuyauterie comprenant, entre l'orifice d'introduction et l'orifice d'évacuation, une partie prenant la forme d'un enroulement en spirale descendante, et entre l'orifice d'introduction et l'enroulement, une portion ascendante, et
le niveau de l'orifice d'introduction étant plus bas que le niveau de la partie supérieure de l'enroulement.

Avantageusement, la partie ascendante présente des buses d'injection disposées de manière à diriger leurs jets vers le haut.

Avantageusement, le dispositif de traitement thermique comporte un système de purge d'air disposé sur la tuyauterie au niveau de son point le plus élevé.

Avantageusement, le dispositif de traitement thermique comporte un système de régulation comportant des moyens pour mesurer le niveau d'eau dans le dispositif collecteur et des moyens pour commander le débit de la pompe en fonction des informations de niveau fournies par lesdits moyens de mesure du niveau.

Avantageusement, le dispositif de traitement thermique comporte une tuyauterie de remplissage raccordée à la tuyauterie entre l'enroulement et l'orifice d'introduction à travers une vanne.

Avantageusement, lorsque l'eau provenant de la pompe est introduite dans la tuyauterie en amont de l'orifice d'introduction, le dispositif de traitement thermique comprend une vanne mise en place au niveau de la base du dispositif collecteur au-dessus de l'orifice d'introduction.

L'invention propose également un ensemble comportant un dispositif de traitement thermique selon l'une des variantes précédentes et au moins une saucisse. caractérisé en ce que le diamètre de la tuyauterie est supérieur à la longueur des saucisses d'au moins 10%.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 montre un dispositif de traitement thermique de saucisses selon l'invention, et
la Fig. 2 montre un détail d'un dispositif de traitement thermique selon l'invention.

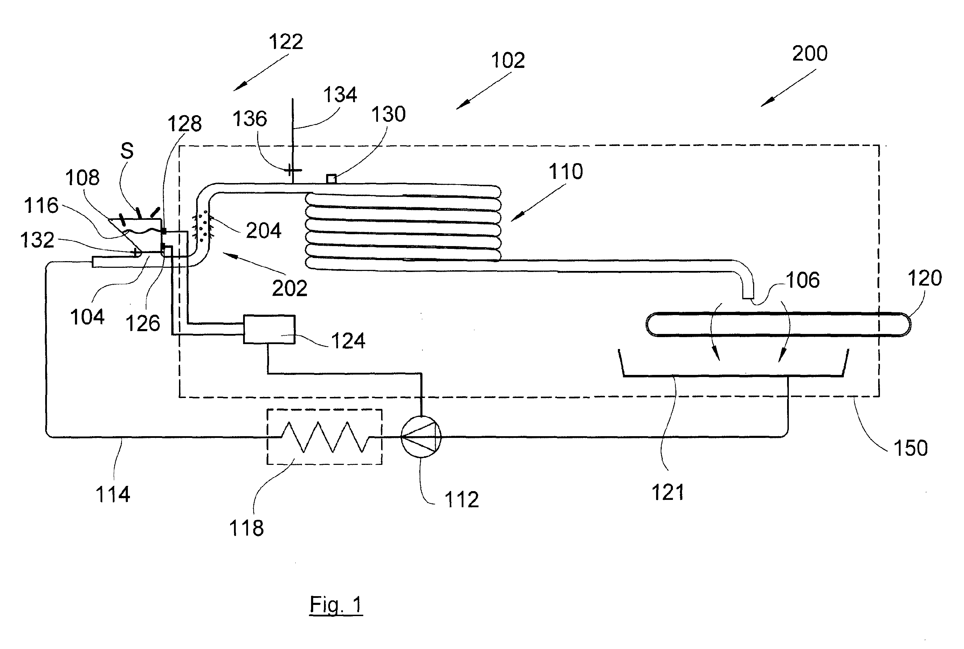

Dans la description qui suit, les termes relatifs à une position sont pris en référence à un dispositif de traitement thermique de saucisses disposé en position de fonctionnement, c'est-à-dire comme il est représenté sur la Fig. 1. Par exemple, la notion "amont" se fait en référence au sens de progression de l'eau dans le dispositif de traitement thermique.

La Fig. 1 montre un dispositif de traitement thermique 200 pour des saucisses S du type saucisses co-extrudées avec une pellicule extérieure de gel, du type alginate ou collagène.

Le dispositif de traitement thermique 200 comprend une tuyauterie 102 qui s'étend entre un orifice d'introduction 104 et un orifice d'évacuation 106.

L'orifice d'introduction 104 est surmonté d'un dispositif collecteur 108 qui est ici en forme de cône qui débouche dans la tuyauterie 102 au niveau de l'orifice d'introduction 104 et qui est destiné à recevoir les saucisses S, qui comme cela est expliqué ci-après sont entraînées dans la tuyauterie 102.

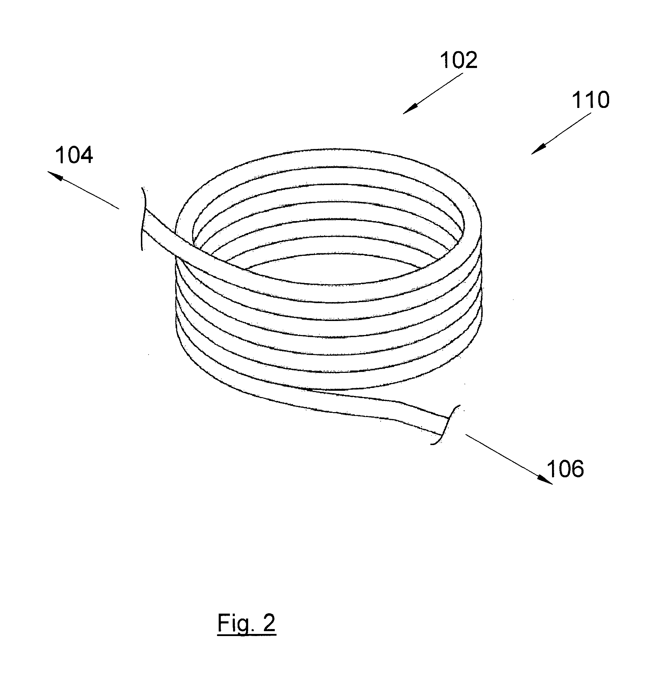

La Fig. 2 montre un détail de la tuyauterie 102. Entre l'orifice d'introduction 104 et l'orifice d'évacuation 106, la tuyauterie 102 comprend une partie prenant la forme d'un enroulement 110 en spirale descendante. L'enroulement 110 consiste en un enroulement autour d'un axe vertical et descendant entre son point de départ et son point d'arrivée.

Un tel enroulement permet un gain de place par rapport à une tuyauterie rectiligne. Bien sûr l'enroulement 110 qui est ici circulaire sur la Fig. 2 pour des raisons de facilités de mises en oeuvre, peut prendre une forme différente. Par exemple, chaque spire peut être allongée horizontalement et prendre une forme voisine d'une ellipse ou d'un rectangle.

Pour entraîner les saucisses S, la tuyauterie 102 est alimentée en eau par une pompe 112 qui propulse l'eau à travers une tuyauterie d'introduction 114 qui débouche dans la tuyauterie 102 en amont de l'orifice d'introduction 104 ou dans le dispositif collecteur 108.

Pour assurer l'entraînement de l'eau dans l'enroulement 110, le niveau d'eau 116 dans le dispositif collecteur 108 est plus haut que le niveau de l'orifice d'évacuation 106 et que le niveau de l'orifice d'introduction 104.

Pour chauffer les saucisses S, l'eau est chauffée par un moyen de chauffage 118 du type échangeur de chaleur qui est ici disposé entre la pompe 112 et la tuyauterie 102. L'eau utilisée est de préférence issue de recirculation.

Le fonctionnement du dispositif de traitement thermique 200 est le suivant. L'eau qui remplit la tuyauterie 102 et le dispositif collecteur 108 est entraînée de manière gravitaire dans l'enroulement du fait de la différence de hauteur entre le niveau d'eau 116 dans le dispositif collecteur 108 et l'orifice d'évacuation 106, les saucisses S qui sont introduites dans le dispositif collecteur 108 sont entraînées avec l'eau et ressortent par l'orifice d'évacuation 106 après avoir subi le traitement thermique dû à l'immersion dans l'eau chaude dans l'enroulement 110.

Au niveau de l'orifice d'évacuation 106, l'eau et les saucisses S sortent de la tuyauterie 102. Les saucisses S tombent sur un moyen de réception comme par exemple un convoyeur à bandes 120 et l'eau s'écoule à travers le convoyeur à bandes 120 pour être ici récupérée à l'aide d'un moyen de récupération 121 disposé sous le moyen de réception et renvoyée dans la pompe 112 afin de faire recirculer l'eau. Les saucisses S qui tombent sur le convoyeur à bandes 120 sont ensuite dirigées vers un poste de traitement ultérieur.

La longueur de l'enroulement 110, la différence de hauteur entre le niveau d'eau 116 dans le dispositif collecteur 108 et l'orifice d'évacuation 106, et le débit de la pompe 112 sont calculés en fonction, entre autres, de la cadence de production des saucisses S souhaitée et du temps de séjours nécessaire au traitement thermique desdites saucisses S dans l'enroulement 110.

Le niveau de l'orifice d'introduction 104 est plus bas que le niveau de la partie supérieure de l'enroulement 110 tout en restant plus haut que le niveau de l'orifice d'évacuation 106. Une telle implantation permet de réduire la hauteur d'introduction des saucisses dans le dispositif collecteur 108.

Pour permettre à l'eau d'atteindre l'enroulement 110, la tuyauterie 102 comprend entre l'orifice d'introduction 104 et l'enroulement 110, une portion ascendante 202.

Pour aider l'ascension des saucisses S dans la portion ascendante 202, des buses d'injection 204 peuvent être disposées dans la partie ascendante 202 de manière à diriger les jets qui en sont expulsés vers le haut et à l'intérieur de la portion ascendante 202. Les jets peuvent être par exemple des jets de vapeur ou d'eau de préférence issue de recirculation.

Dans un mode de réalisation particulier du dispositif de traitement thermique 200 de la Fig. 1, pour des saucisses de 120 mm de longueur, avec une eau à 90°C et une pompe débitant 60m³/h, le dispositif de traitement thermique 200 présente les caractéristiques suivantes:
- la tuyauterie 102 présente un diamètre de 150 mm,
- la hauteur entre le niveau d'eau 116 dans le dispositif collecteur 108 et l'orifice d'évacuation 106 est de l'ordre de 300 mm,
- l'enroulement 110 présente une longueur d'environ 60 mètres pour un temps de séjours d'environ 1 minute. Pour éviter le colmatage de la tuyauterie 102 du dispositif de traitement thermique 200, le diamètre de la tuyauterie 102 est supérieur à la longueur des saucisses S d'au moins 10 %

Pour limiter les déperditions thermiques, l'enroulement 110, le moyen de réception 120 et le moyen de récupération 121 sont disposés à l'intérieur d'une armoire thermiquement isolante 150 ou d'une cuve thermiquement isolée.

Pour éviter que de l'air s'introduise dans la tuyauterie 102, le dispositif collecteur 108 doit toujours contenir suffisamment d'eau pour que l'orifice d'introduction 104 soit sous le niveau d'eau. A cette fin, le dispositif de traitement thermique 200 comprend un système de régulation 122 qui comporte des moyens pour mesurer le niveau d'eau dans le dispositif collecteur 108 et des moyens pour commander le débit de la pompe 112 en fonction des informations de niveau fournies par lesdits moyens de mesure du niveau.

Les moyens pour commander le débit de la pompe prennent la forme d'une unité de contrôle 124, et les moyens pour mesurer prennent la forme d'un capteur de niveau bas 126 et d'un capteur de niveau haut 128 ou d'un capteur analogique de niveau. Le capteur de niveau bas 126 permet de détecter lorsque l'eau dans le dispositif collecteur 108 atteint un niveau minimal et le capteur de niveau haut 128 permet de détecter lorsque l'eau dans le dispositif collecteur 108 atteint un niveau maximal.

L'unité de contrôle 124 reçoit les informations délivrées par les capteurs 126 et 128 et commande la pompe 112 de la manière suivante. Lorsque l'eau atteint le capteur de niveau bas 126, l'unité de contrôle 124 commande l'accélération de la pompe 112 pour augmenter le débit d'eau et lorsque l'eau atteint le capteur de niveau haut 128, l'unité de contrôle 124 commande le ralentissement de la pompe 112 pour diminuer le débit d'eau.

Pour éviter que de l'air puisse perturber l'écoulement de l'eau et des saucisses S dans l'enroulement 110, un système de purge d'air 130 est disposé sur la tuyauterie 102 au niveau de son point le plus élevé.

Le dispositif de traitement thermique 200 est facile à nettoyer. En effet, il suffit, après l'arrêt de la fourniture de saucisses S au niveau du dispositif collecteur 108, de vidanger le dispositif de traitement thermique 200 et d'introduire en lieu et place une solution de nettoyage. Cette solution de nettoyage circule alors en circuit fermé dans la totalité du dispositif de traitement thermique 200.

Lorsque l'eau provenant de la pompe 112 est introduite dans la tuyauterie 102 en amont de l'orifice d'introduction 104, le dispositif de traitement thermique 200 comporte avantageusement une vanne 132 mise en place au niveau de la base du dispositif collecteur 108 au-dessus de l'orifice d'introduction 104. Pour remplir l'enroulement 110 lors de la mise en service du dispositif de traitement thermique 200, la vanne 132 est fermée et l'eau provenant de la pompe 112 remplit alors l'enroulement 110. Lorsque l'enroulement 110 est rempli, la vanne 132 peut être ouverte et tant que de l'eau arrive au niveau de l'orifice d'introduction 104, l'enroulement 110 reste rempli.

Le remplissage de l'enroulement 110 peut aussi s'effectuer par l'intermédiaire d'une tuyauterie de remplissage 134 qui est raccordée au point haut de la tuyauterie 102 à travers une vanne 136 qui est ouverte pour remplir l'enroulement 110 et reste fermée après. Cette tuyauterie de remplissage 134 peut être également utilisée dans le cas où l'eau provenant de la pompe 112 est introduite dans la tuyauterie 102 en amont de l'orifice d'introduction 104. En position ouverte, la tuyauterie de remplissage 134 permet par exemple de réaliser des appoints d'eau dans le circuit pour compenser l'évaporation ou l'eau entraînée par les saucisses S.

Bien entendu, la présente invention n'est pas limitée aux exemples et modes de réalisation décrits et représentés, mais elle est susceptible de nombreuses variantes accessibles à l'homme de l'art.

## Revendications

1. Dispositif de traitement thermique (200), en particulier pour des saucisses (S) du type saucisses co-extrudées, ledit dispositif de traitement thermique (200) comportant:
- une tuyauterie (102) s'étendant entre un orifice d'introduction (104) et un orifice d'évacuation (106) par lequel les saucisses (S) sortent de la tuyauterie (102),
- un dispositif collecteur (108) qui est disposé au-dessus de l'orifice d'introduction (104), qui débouche dans la tuyauterie (102) au niveau de l'orifice d'introduction (104) et qui est destiné à permettre l'introduction des saucisses (S) dans la tuyauterie (102),
- une pompe (112) destinée à propulser de l'eau chaude dans la tuyauterie (102) en amont de l'orifice d'introduction (104) ou dans le dispositif collecteur (108),
le niveau d'eau (116) dans le dispositif collecteur (108) étant plus haut que le niveau de l'orifice d'évacuation (106) et que le niveau de l'orifice d'introduction (104), et le dispositif de traitement thermique (200) étant **caractérisé en ce que**
la tuyauterie (102) comprend, entre l'orifice d'introduction (104) et l'orifice d'évacuation (106), une partie prenant la forme d'un enroulement (110) en spirale descendante, et entre l'orifice d'introduction (104) et l'enroulement (110), une portion ascendante (202), et **en ce que**
le niveau de l'orifice d'introduction (104) est plus bas que le niveau de la partie supérieure de l'enroulement (110).

2. Dispositif de traitement thermique (200) selon la revendication 1, **caractérisé en ce que** la partie ascendante (202) présente des buses d'injection (204) disposées de manière à diriger leurs jets vers le haut.

3. Dispositif de traitement thermique (200) selon l'une des revendications 1 ou 2, **caractérisé en ce qu'**il comporte un système de purge d'air (130) disposé sur la tuyauterie (102) au niveau de son point le plus élevé.

4. Dispositif de traitement thermique (200) selon l'une des revendications 1 à 3, **caractérisé en ce qu'**il comporte un système de régulation (122) comportant des moyens pour mesurer le niveau d'eau dans le dispositif collecteur (108) et des moyens pour commander le débit de la pompe (112) en fonction des informations de niveau fournies par lesdits moyens de mesure du niveau.

5. Dispositif de traitement thermique (200) selon l'une des revendications 1 à 4, **caractérisé en ce qu'**il comporte une tuyauterie de remplissage (134) raccordée à la tuyauterie (102) entre l'enroulement (110) et l'orifice d'introduction (104) à travers une vanne (136).

6. Dispositif de traitement thermique (200) selon l'une des revendications 1 à 4, **caractérisé en ce que**, lorsque l'eau provenant de la pompe (112) est introduite dans la tuyauterie (102) en amont de l'orifice d'introduction (104), il comprend une vanne (132) mise en place au niveau de la base du dispositif collecteur (108) au-dessus de l'orifice d'introduction (104).

7. Ensemble comportant un dispositif de traitement thermique (200) selon l'une des revendications 1 à 6 et au moins une saucisse (S), **caractérisé en ce que** le diamètre de la tuyauterie (102) est supérieur à la longueur des saucisses (S) d'au moins 10%.

## Patentansprüche

1. Vorrichtung zur Wärmebehandlung (200), insbesondere für Würstchen (S) von der Art gemeinsam extrudierter Würstchen, wobei die genannte Vorrichtung zur Wärmebehandlung (200) umfasst:
- ein Röhrensystem (102), welches sich zwischen einer Einführungsöffnung (104) und einer Entleerungsöffnung (106) erstreckt, durch die die Würstchen (S) das Röhrensystem (102) verlassen,
- eine Sammelvorrichtung (108), die oberhalb der Einführungsöffnung (104) angeordnet ist, die auf der Höhe der Einführungsöffnung (104) in das Röhrensystem (102) mündet und die dazu dient, die Würstchen (S) in das Röhrensystem einzuführen,
- eine Pumpe (112), die dazu dient, heißes Wasser in dem Röhrensystem (102) stromaufwärts von der Einführungsöffnung (104) oder in der Sammelvorrichtung (108) vorzutreiben,
wobei der Wasserspiegel (116) in der Sammelvorrichtung (108) höher ist als die Höhe der Entleerungsöffnung (106) und die Höhe der Einführungsöffnung (104), und wobei die Vorrichtung zur Wärmebehandlung (200) **dadurch gekennzeichnet ist, dass**
das Röhrensystem (102) zwischen der Einführungsöffnung (104) und der Entleerungsöffnung (106) einen Teil, der die Form einer Wicklung (110) in einer absteigenden Spirale aufweist und zwischen der Einführungsöffnung (104) und der Wicklung (110) einen ansteigenden Abschnitt (202) umfasst, und dass
die Höhe der Einführungsöffnung (104) niedriger ist als die Höhe des oberen Teils der Wicklung (110).

2. Vorrichtung zur Wärmebehandlung (200) nach Anspruch 1, **dadurch gekennzeichnet, dass** der ansteigende Abschnitt (202) Einspritzdüsen (204) aufweist, die so angeordnet sind, dass sie ihre Strahlen nach oben schicken.

3. Vorrichtung zur Wärmebehandlung (200) nach einem der Ansprüche 1 oder 2, **dadurch gekennzeichnet, dass** sie ein Luftabscheidungssystem (130) umfasst, welches auf dem Röhrensystem auf der Höhe seines höchsten Punktes angeordnet ist.

4. Vorrichtung zur Wärmebehandlung (200) nach einem der Ansprüche 1 bis 3, **dadurch gekennzeichnet, dass** sie ein Regelungssystem (122) umfasst, welches Mittel zur Messung des Wasserstandes in der Sammelvorrichtung (108) und Mittel zur Steuerung des Förderstromes der Pumpe (112) in Abhängigkeit von den Informationen über den Wasserstand umfasst, die von den genannten Mitteln zur Messung des Wasserstands geliefert worden sind.

5. Vorrichtung zur Wärmebehandlung (200) nach einem der Ansprüche 1 bis 4, **dadurch gekennzeichnet, dass** sie ein Röhrensystem (134) zum Auffüllen umfasst, welches mit dem Röhrensystem (102) zwischen der Wicklung (110) und der Einführungsöffnung (104) über einen Schieber (136) verbunden ist.

6. Vorrichtung zur Wärmebehandlung (200) nach einem der Ansprüche 1 bis 4, **dadurch gekennzeichnet, dass**, wenn Wasser von der Pumpe (112) in das Röhrensystem (102) stromauf von der Einführungsöffnung (104) eingeführt wird, sie einen Schieber (132) umfasst, der auf der Höhe des Bodens der Sammelvorrichtung oberhalb der Einführungsöffnung (104) angeordnet ist.

7. System mit einer Vorrichtung zur Wärmebehandlung (200) nach einem der Ansprüche 1 bis 6 und mindestens einem Würstchen (S), **dadurch gekennzeichnet, dass** der Durchmesser des Röhrensystems (102) um mindestens 10% größer ist als die Länge der Würstchen (S).

## Claims

1. Heat treatment device (200), in particular for sausages (S) of the co-extruded type, said heat treatment device (200) comprising:
- a pipe (102) extending between an introduction aperture (104) and an evacuation aperture (106), through which the sausages (S) leave the pipe (102),
- a collector device (108) which is arranged above the introduction aperture (104), which opens into the pipe (102) at the level of the introduction aperture (104) and which is intended to allow for the introduction of the sausages (S) into the pipe (102),
- a pump (112) intended to propel hot water into the pipe (102) upstream of the introduction aperture (104) or into the collector device (108),
the water level (116) in the collector device (108) being higher than the level of the evacuation aperture (106), and that the level of the introduction aperture (104), and the heat treatment device (200) being **characterized in that**
the pipe (102) comprises, between the introduction aperture (104) and the evacuation aperture (106), a part which takes the shape of a coil (110) in a descending spiral, and between the introduction aperture (104) and the coil (110), an ascending portion (202),
and **in that**
the level of the introduction aperture (104) is lower than the level of the upper part of the coil (110).

2. Heat treatment device (200) according to claim 1, **characterized in that** the ascending part (202) comprises injection nozzles (204), arranged in such a way as to direct their jets upwards.

3. Heat treatment device (200) according to one of claims 1 or 2, **characterized in that** it comprises an air purging system (130) arranged on the pipe (102) at the level of its highest point.

4. Heat treatment device (200) according to one of claims 1 to 3, **characterized in that** it comprises a regulation system (122) comprising means for measuring the level of water in the collector device (108), and means for controlling the delivery from the pump (112) as a function of the information relating to the level provided by said level measuring means.

5. Heat treatment device (200) according to one of claims 1 to 4, **characterized in that** it comprises a filling pipe (134) connected to the pipe (102) between the coil (110) and the introduction aperture (104) by way of a valve (136).

6. Heat treatment device (200) according to one of claims 1 to 4, **characterized in that**, when the water coming from the pump (112) is introduced into the pipe (102) upstream of the introduction aperture (104), it comprises a valve (132) installed at the level of the base of the collector device (108) above the introduction aperture (104).

7. Assembly comprising a heat treatment device (200) according to one of claims 1 to 6 and at least one sausage (S), **characterized in that** the diameter of the pipe (102) is greater than the length of the sausages (S) by at least 10%.
